# EUROPÄISCHE PATENTANMELDUNG

(11) **EP 0 706 911 A2**
(43) Veröffentlichungstag der Anmeldung: **17.04.1996**
(21) Anmeldenummer: 94119979.6
(22) Anmeldetag: 16.12.1994
(51) Int. Cl.: B60N 2/44

(54) **Schonbezüge und Rückenstütze für eine PKW-Sitzausstattung**

(30) Priorität: 22.11.1994 DE 9418699 U; 19.09.1994 DE 9415169 U
(71) Anmelder: Furnitex Stoffe Vertriebs GmbH, D-26160 Bad Zwischenahn (DE)
(72) Erfinder: Heye, Werner, D-26160 Bad Zwischenahn (DE)
(74) Vertreter: Kern, Wolfgang, Dipl.-Ing.

(57) **Zusammenfassung**

Die Erfindung betrifft Schonbezüge und eine Rückenstütze für eine PKW-Sitzausstattung gemäß dem Oberbegriff des Anspruchs 1:
Die herkömmlichen Schonbezüge sind so beschaffen, daß bei ihrem Einbau oder Wechsel die Sitzbänke oder Rückenlehnen zur Fixierung der Haken, die mit Gummibändern versehen sind und die Funktion der Straffung der Bezüge übernehmen, demontiert werden müssen, wobei im Falle der Verwendung von Rückenstützen diese vor dem Wechsel der Schonbezüge abzunehmen sind, um danach wieder an der anatomisch richtigen Stelle der Rückenlehne angebracht zu werden.

Zur Vereinfachung der Handhabung der Schonbezüge sowie der Rückenstützen wird vorgeschlagen, die Schonbezüge für die Vordersitze aus zwei Teilen, nämlich einem Rückenteil und einem Sitzteil, auszubilden, von denen der Sitzteil an seinen Seitflächen einen Tunnelzug mit eingelegter Zugkordel und an den beiden Seiten einen Gummizug mit Haken zur Befestigung des Bezugs und an seinem hinteren Sitzflächenende einen Stretchtunnel aufweist, der sich durch die Sitzkehle erstreckt und wobei der Rückenteil mit wenigstens einer Stofflasche aus Stretchstoff versehen ist, die wenigstens ein Veloursband und als Gegenstück ein Pilzband aufweist, das mit dem Veloursband zusammenwirkt, und wobei darüber hinaus auch die Rückstütze mittels wenigstens eines auf ihr angebrachten Klettverschlusses auf der Rückenlehne angeordnet wird, und zwar unterhalb des Schonbezugs, so daß sie gewissermaßen unsichtbar bleibt.

## Beschreibung

Die Erfindung betrifft Schonbezüge und eine Rückenstütze für eine PKW-Sitzausstattung gemäß dem Oberbegriff des Anspruchs 1.

Die herkömmlichen Schonbezüge sind so beschaffen, daß bei ihrem Einbau oder Wechsel die Sitzbänke oder Rückenlehnen zur Fixierung der Haken, die mit Gummibändern versehen sind und die Funktion der Straffung der Bezüge übernehmen, demontiert werden müssen. Dazu kommt, daß diese Haken bei einer solchen Montage eine akute Verletzungsgefahr darstellen, da sie aufgrund der gedehnten Gummibänder unter Zugspannung stehen und deshalb beim Ein- und Ausbau der Schonbezüge von Hand betätigt werden müssen und dabei zurückschnappen können.

In diesem Zusammenhang sind auch Rückenstützen, sogenannte Lordosenstützen für Autositze bekannt geworden, die gewöhnlich auf der Oberfläche der Rückenlehne des Sitzes bzw. dessen Schonbezugs festgeschnallt oder festgebunden werden und somit sichtbar angebracht sind oder als integraler Bestandteil des Sitzes Verwendung finden, also bei der Herstellung des Sitzes in das Rückenlehnenpolster mit eingearbeitet worden sind. Werden die Schonbezüge über mit derartigen Rückenstützen versehene Rückenlehnen gespannt, dann besteht erst recht die oben erwähnte Verletzungsgefahr, weil die Spannung des Schonbezuges aufgrund der zusätzlichen Ausbauchung der Rückenlehne noch vergrößert wird. Außerdem sind die unterhalb derartiger Schonbezüge angeordneten Rückenstützen nur umständlich zugänglich, wenn ihre Positionierung verändert werden soll.

Die Aufgabe der Erfindung besteht deshalb darin, die Schonbezüge für eine PKW-Sitzausstattung so auszubilden, daß sie eine verbrauchefreundlichere Montage in kürzester Zeit ermöglichen, wobei sie mit wenigen Handgriffen auf den Polstern aufgebracht werden können. Diese Verbesserung der Montage, und zwar auch hinsichtlich der benötigten Zeit, soll dazu führen, daß die Schonbezüge häufiger gewaschen werden, um auf diese Weise Verschmutzungen schneller beseitigen zu können, die beispielsweise dadurch entstehen, daß in zunehmendem Maße die Rückenlehnen zur Vergrößerung des Transportraumes umgeklappt werden, um das Fahrzeug vielseitiger verwendbar zu machen. Diese Notwendigkeit ergibt sich insbesondere bei sogenannten Kombi-Fahrzeugen. In jedem Fall führt dann die jederzeit gegebene Waschbarkeit der Bezüge auch zu einer Verbesserung der Kinderfreundlichkeit und Hygiene.

In diesem Zusammenhang soll auch die Anwendung der genannten Rückenstützen insofern verbessert werden, als sie einfacher an der anatomisch richtigen Stelle angebracht werden können, und zwar insbesondere direkt auf dem Rückenlehnenbezug, also unterhalb der Schonbezüge.

Diese Aufgabe wird erfindungsgemäß dadurch gelöst, daß die Schonbezüge für die Vordersitze aus zwei Teilen, nämlich einem Rückenteil und einem Sitzteil, bestehen, von denen der Sitzteil an seinen Seitenflächen einen Tunnelzug mit eingelegter Zugkordel, an den beiden Seiten einen Gummizug mit Haken zur Befestigung des Bezugs und an seinem hinteren Sitzflächenende einen Stretchtunnel, der sich durch die Sitzkehle erstreckt, aufweist und der Rückenteil mit wenigstens einer Stofflasche aus Stretchstoff versehen ist, die wenigstens ein Veloursband und als Gegenstück ein Pilzband aufweist, das mit dem Veloursband zusammenwirkt.

Durch diese Konstruktion der Schonbezüge ist ihre leichte Ein- und Ausbaubarkeit gewährleistet, ohne daß hierzu die Vordersitze demontiert werden müssen oder bei der Qualität der Schonbezüge hinsichtlich ihrer Paßform und Anpaßbarkeit beim beim Sitzen die Polsteroberflächen Nachteile in Kauf zu nehmen sind.

Vorteilhafte Ausgestaltungen der Erfindung sind in den Unteransprüchen gekennzeichnet.

Dabei ist besonders hervorzuheben, daß auch der Rücksitzbankschonbezug aus wenigstens zwei Teilen bestehen kann, nämlich wenigstens einem Rückenteil und einem Sitzteil deren Enden in der Kehle der Rücksitzbank zwischen Rückenlehne und Sitz Stretchtunnel zur Straffung der Sitzfläche des Sitzteilbezugs aufweisen, wobei sowohl der Sitzteilbezug als auch der Rückenteilbezug mit Tunnelzügen zur Aufnahme von Zugkordeln zwecks Befestigung und Straffung der Schonbezüge auf der Rücksitzbank versehen sind.

Des weiteren läßt sich auch der Schonbezug der Kopfstützen mit Hilfe eines Klettverschlusses, bestehend aus wenigstens einem Veloursband und einem Pilzband, die zusammenwirken, vorteilhaft auf dem Polster befestigen.

Durch diese Konstruktion der Schonbezüge ist ihre leichte Ein- und Ausbaubarkeit gewährleistet, ohne daß hierzu die Vordersitze und die Rücksitzbank demontiert werden müssen oder bei der Qualität der Schonbezüge hinsichtlich ihrer Paßform und Anpaßbarkeit beim Sitzen an die Polsteroberflächen Nachteile in Kaufzu nehmen sind.

Besonders bewährt hat sich, die Stofflasche am unteren Ende des Vorderteils des Rückenteils anzubringen und an der Innenseite mit dem Veloursband zu versehen, das mit dem an der Innenseite des Rückenteils angebrachten Pilzband zur Halterung und Straffung des Rückenteils des Schonbezugs aufder Rückenlehne des Vordersitzes zusammenwirkt.

Die in die Tunnelzüge des Sitzteils. bzw. der Sitzbank eingelegten Zugkordeln treten zweckmäßigerweise an der Sitzfrontseite bzw. Rückenlehnenoberseite aus diesen Tunnelzügen aus und lassen sich dort mit Hilfe von Kordelfeststellern straffen, wodurch eine leichte Handhabung beim Ein- und Ausbau der Bezüge erreicht wird.

Zur weiteren Verbesserung des Sitzkomforts können die Stretchtunnel zwischen Rückenlehne und Sitz mit einer Rolle aus Schaumstoff versehen werden, die durch die Sitzkehle geschoben wird und sich dieser im Übergang zwischen Rücken- und Sitzfläche flexibel anpaßt. Diese Schaumstoffrolle, die zweckmäßigerweise in die Stretchtunnel eingenäht wird, ist, gemäß einer weiteren Ausgestaltung der Erfindung, so zu bemessen, daß sie dem Schonbezugsstoff zur Strafung der Sitzfläche einen Rutschwiderstand bietet.

Besonders bewährt hat sich in diesem Zusammenhang die Ausbildung der Rückenstütze als Schaumstoffpolster, das auf der Rückenlehne des Sitzes mittels wenigstens eines auf ihr angebrachten Klettverschlusses oder mittels Teilen eines solchen Verschlusses befestigtbar ist und damit unterhalb des Schonbezuges auf der Rückenlehne angeordnet wird, so daß die Rückenstütze gewissermaßen unsichtbar bleibt und wie ein integraler Bestandteil des Sitzes wirkt.

Dadurch, daß die Befestigung der Rückenstütze mit Hilfe von Klettverschlüssen, insbesondere aber Pilzbändern möglich ist, wird ein stabiler Sitz der Stütze auf der Oberfläche der mit Polsterstoff versehenen Rückenlehne erreicht und jegliche Verrutschungsgefahr ausgeschlossen. Andererseits läßt sich die Stütze, falls die Abstützung des Rückens der betreffenden Person an einer anderen Stelle gewünscht wird oder eine andere Person auf dem Sitz Platz nimmt, die ebenfalls eine Stützung ihres Rückens bzw. ihrer Wirbelsäule wünscht, auch leicht wieder von der Lehnenoberfläche ablösen und entsprechend anders positionieren.

Die Erfindung wird nachfolgend anhand der in der Zeichnung dargestellten Ausführungsbeispiele näher erläutert. In der Zeichnung zeigen
- Fig. 1: eine schematische perspektivische Darstellung der Vordersitze eines PKW's mit den beiden zugehörigen separaten Kopfstützen, jeweils bezogen mit den erfindungsgemäßen Schonbezügen,
- Fig. 2: eine schematische perspektivische Darstellung der Rücksitzbank mit einteiliger Rückenlehne, ebenfalls bezogen mit dem erfindungsgemäßen Schonbezug.
- Fig. 3: eine schematische Seitenansicht eines Fahrersitzes, die die Sitzhaltung des Fahrers bei der Verwendung der Rückenstütze zeigt,
- Fig. 4: eine schematische Rückansicht der Rückenstütze von Fig. 3,
- Fig. 5: eine schematische Vorderansicht der Rückenstütze
- Fig. 6: eine übliche Seitenansicht der Vordersitze eines Pkws mit auf dem Rückenlehnenpolster des Fahrersitzes angebrachter Rückenstütze und
- Fig. 7: eine der Fig. 6 ähnliche Ansicht, bei der jedoch die Rückenstütze als unter dem Schonbezug angebrachter Körper dargestellt ist.

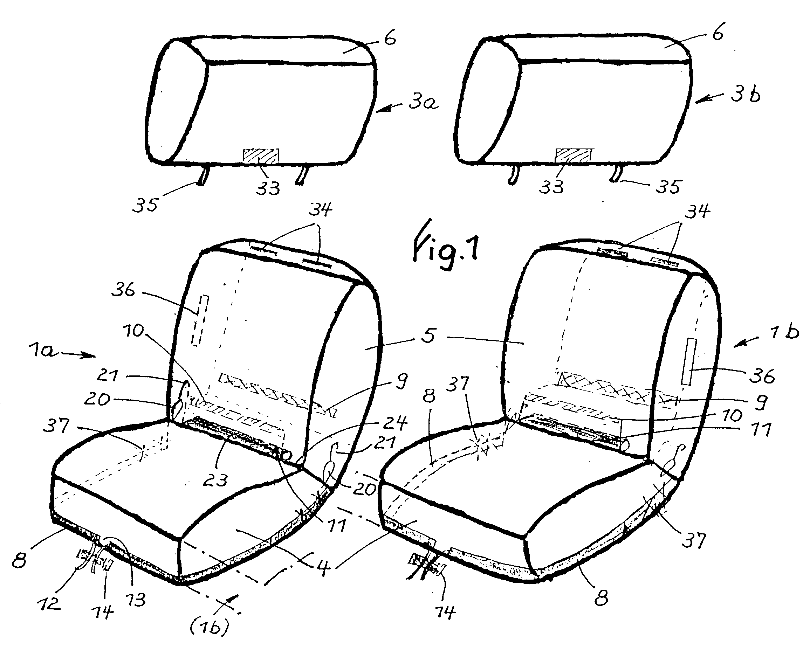

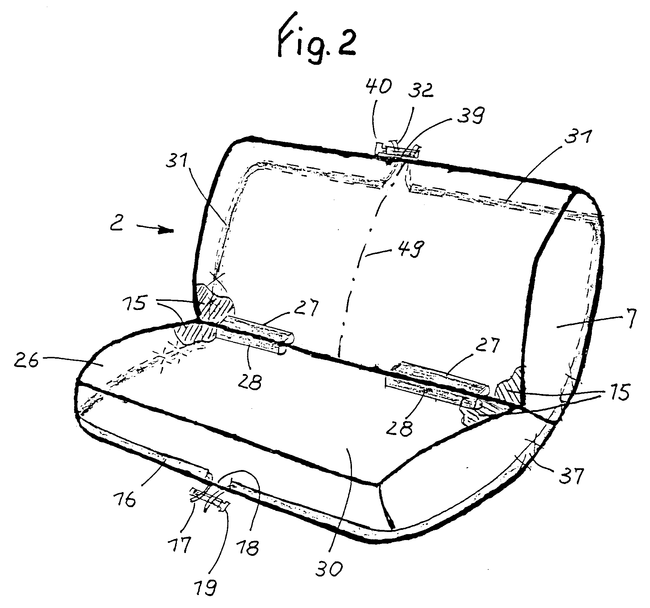

Die in den Figuren 1 und 2 dargestellten Schonbezüge sind auf die Sitzausstattung eines PKW's aufgezogen, bestehend aus den beiden Vordersitzen 1a, 1b, den zugehörigen Kopfstützen 3a, 3b und der zwei/drei-sitzigen Rücksitzbank 2 mit einteiliger Rückenlehne.

Die Schonbezüge für die Vordersitze 1a und 1b bestehen aus zwei Teilen, nämlich dem Rückenteil 5 und dem Sitzteil 4. Der Sitzteil 4 weist an seinen Seitflächen im Bereich des Bodens einen umlaufenden Tunnelzug 8 auf, in den eine Zugkordel 12 eingelegt ist, die an den Seitenflächen der Sitze mittels Riegel 37 befestigt ist, so daß sich der Sitzteil 4 nach dem Aufziehen auf den Sitz mit Hilfe dieser Zugkordel am Sitz befestigen läßt. Die Zugkordel 12 tritt hierzu an der Sitzfrontseite 13 aus dem Tunnelzug 8 aus und wird mit Hilfe eines Kordelfeststellers 14 nach ihrer Spannung festgelegt.

An den beiden Seiten des Sitzteils 4 ist je ein Gummizug 20 mit einem Haken 21 angeordnet, die ebenfalls zur Befestigung des Schonbezugs am Sitz dienen, wobei der Haken des Gummizugs in die Sitzunterseite eingehakt wird.

Am hinteren Sitzflächenende 23 befindet sich ein Stretchtunnel 11, der sich durch die Sitzkehle 24 erstreckt und mit einer Schaumstoffrolle bzw. Halbrolle versehen ist, die durch die Sitzkehle geschoben ist und sich dieser im Übergang zwischen Rücken- und Sitzfläche flexibel anpaßt. Diese Schaumstoffrolle, die in den Stretchtunnel eingenäht ist, ist so bemesssen, daß sie dem Schonbezugstoff zur Straffung der Sitzfläche einen Rutschwiderstand bietet.

Der Rückenteil 5 des Schonbezugs für die Vordersitze weist eine Stofflasche 25 aus Stretchstoff auf, die am unteren Ende des Rückenteils 5 angebracht ist und an der Innenseite mit einem Veloursband 10 versehen ist, das mit einem an der Innenseite des Rückenteils angebrachten Pilzband 9 zur Halterung und Straffung des Rückenteils des Schonbezugs auf der Rückenlehne des Vordersitzes zusammenwirkt. Somit bildet das Pilzband 9, das auf der Innenseite des Rückenteils des Rückenlehnenbezugs 5, der wie der Sitzbezug zu 100 % aus Stretch bestehen kann, das Gegenstück zum Veloursband 10 und kann wie letzteres aufgenäht sein. Wie bereits erwähnt, wird die Stretchlasche 25, versehen mit dem Veloursband 10, durch die Sitzkehle gezogen und an der Innenseite des Rückenteils 5 an dem dort festgenähten Pilzband 9 befestigt und gestrafft.

Der Rückenteil 7 der in Fig. 2 gezeigten Rücksitzbank 2 kann, wie durch die strichpunktierte Linie 49 angedeutet, aus zwei Rückenlehnenteilen bestehen, die jeweils einen eigenen Schonbezug aufweisen. Der in der Zeichnung dargestellte und im folgenden näher beschriebene Schonbezug der Rücksitzbank 2 besteht wie der Schonbezug jedes der beiden Vordersitze aus zwei Teilen, nämlich einem Rückenteil 7 und einem Sitzteil 26, deren Enden in der Kehle 29 der Rücksitzbank 2 zwischen Rückenlehne und Sitz zwei benachbarte Stretchtunnel 27, 28 aufweisen, die zur Straffung der Sitzfläche 30 des Sitzteilbezugs 26 dienen. Sowohl der Sitzteilbezug 26 als auch der Rückenteilbezug 38 sind mit Tunnelzügen 16, 31 der an den Vordersitzen verwendeten Art versehen, die je eine Zugkordel 17, 32 aufnehmen, welche zur Befestigung und Straffung der Schonbezüge 7, 26 auf der Rücksitzbank dienen. Darüber hinaus sind auch an der Rücksitzbank 2 beidseitig Riegel 37 für die Kordelbefestigung vorgesehen, und die Kordel 17 tritt an der Sitzvorderseite 18 aus dem Tunnelzug 16 etwa in Sitzmitte aus, so daß sie von Hand ergriffen werden kann, um strammgezogen zu werden und danach mit Hilfe eines Kordelfeststellers festgelegt zu werden.

Bei der Rücksitzbank ist auch der Rückenteilschonbezug 7 mit Hilfe einer in einem umlaufenden Tunnelzug 31 geführten Zugkordel 32 im Bereich des Lehnenrandes befestigbar und straffbar, wobei sich die Zugkordel mit Hilfe eines Kordelfeststellers 40 festlegen läßt.

Zu beiden Seiten des Sitzteilbezugs 26 der Sitzbank 2 sind Stretchtaschen 15 vorgesehen, in die Polsterecken aus Schaumstoff eingeführt werden. An diese Stretchtaschen schließen sich die erwähnten Stretchtunnel 27, 28 mit den eingenähten Schaumstoffrollen an.

Im übrigen können die Tunnelzüge 8, 23, 27, 28 aus Stretchmaterial bestehen, und die Stretchtaschen 15 der Rücksitzbank 2 sind zweckmäßigerweise aufgenäht.

Die beiden Kopfstützen 3a, 3b, die zu den Vordersitzen 1a, 1b gehören, sind mit Schonbezügen 6 versehen, die sich mit Hilfe eines Klettverschlusses 33, bestehend aus einem Veloursband und einem mit diesem zusammenwirkenden Pilzband, auf dem Polster befestigen lassen. Damit die Kopfstützenhalterungen 35 an den Sitzlehnen befestigt werden können, ist auf der Oberseite jedes Rückenteils 5 des betreffenden Schonbezugs ein Ausschnitt 34 vorgesehen, durch den die Kopfstützenhalterungen hindurchgesteckt werden können.

Da derartige Schonbezüge nicht nur in viertürigen Fahrzeugen Verwendung finden sondern auch in zweitürigen Fahrzeugen, bei denen die Lehnen der Vordersitze umgeklappt werden müssen, damit die hintere Sitzbank zugänglich wird, ist bei zweitürigen Fahrzeugen vorgesehen, daß an den Außenseiten 35 der Rückenteile 5 Ausschnitte 36 für den Durchgang der Entriegelungshebel zum Wegklappen der Rücklehnen hergestellt werden können, die mit dem Originalstoff eingefaßt sind. Im Falle der Verwendung der Schonbezüg in einem viertürigen Fahrzeug bleiben diese Ausschnitte 36 geschlossen, bei zweitürigen Fahrzeugen werden sie je nach Höhe des Verriegelungshebels für die angebrachten Riegel durchtrennt, so daß die Öffnung für den Entriegelungshebel frei wird.

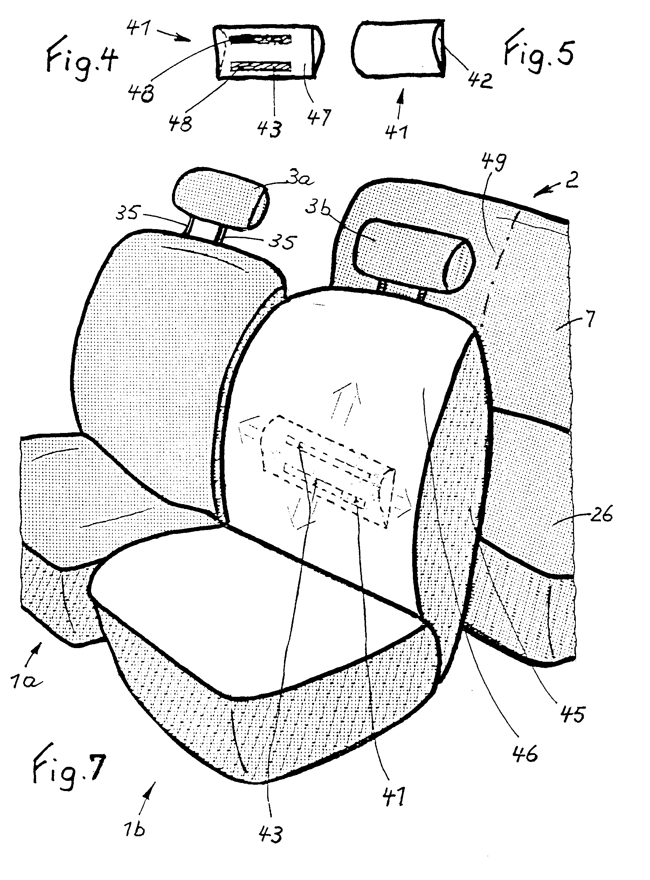

Fig. 6 zeigt die übliche Polstersitzgarnitur eines Pkws, bei der die Rückenlehne 45 des Fahrersitzes 1b mit der Rückenstütze 41 versehen ist, die mittels eines auf ihrer in Fig. 4 dargestellten Rückseite 47 angebrachten Klettverschlusses 43 in Form zweier paralleler Pilzbänder 48 an der anatomisch richtigen Stelle auf der Oberfläche des Polsterbezuges der Rückenlehne 45 aufgeklebt ist.

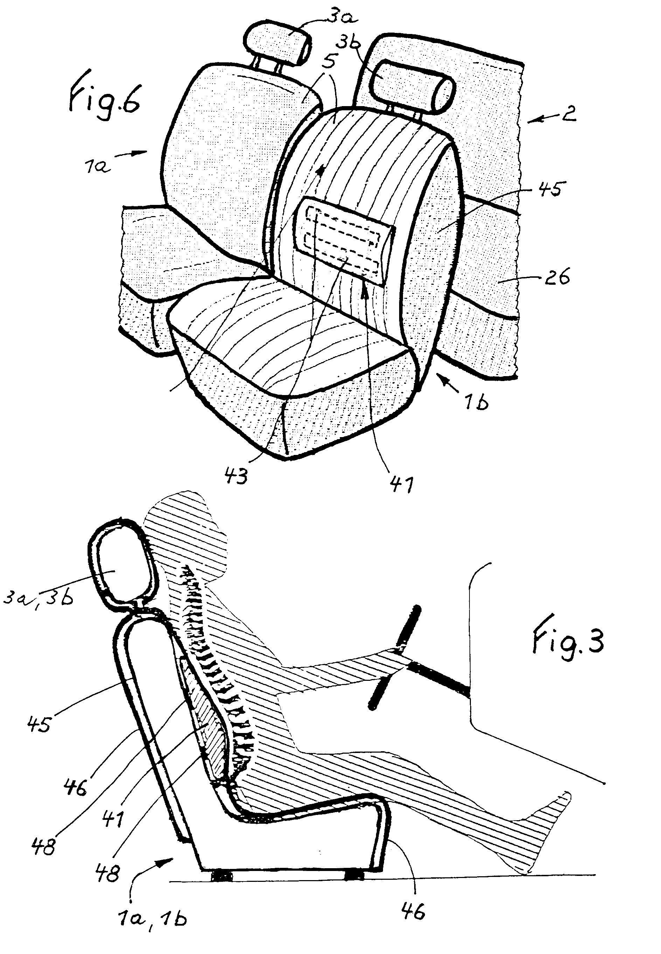

Die Fig. 7 und 3 zeigen die Verwendung der Rückenstütze 41 unterhalb eines über den Autositz 1b gezogenen Schonbezugs 46, weshalb die Rückenstütze gestrichelt dargestellt ist. Auf diese Weise wird die Rückenstütze zumindest optisch zu einem integralen Bestandteil des Autositzes 1b bzw. 1a oder 2, also der Rücksitzlehne, läßt sich aber auch, falls ihre Anbringung aus anatomischen Gründen an einer anderen Stelle der Rückenlehne erfolgen soll, ohne weiteres vom Polsterstoff der Rückenlehne 45 lösen, da ihr Klettverschluß 43 auf der Rückseite 47 ein solches Lösen und Wiederbefestigen ermöglicht. Der an den Seiten mit Polyesterstrech versehene Schonbezug stellt dabei für die Rückenstütze eine zusätzliche Sicherung gegen seitliches Verrutschen dar, weil er die Rückenstütze unter Spannung umschließt.

Die in den Fig. 4 und 5 dargestellte Rückenstütze, die auch als Lordosenstütze bezeichnet wird, besteht bei diesem Ausführungsbeispiel aus Polyurethan-Weichschaum, und ihr Klettverschluß 43 besteht aus einem Veloursband und einem Pilz- oder Hakenband, die parallel übereinanderliegen, jedoch auch in mehrere Abstände aufgeteilt sein können, um die gesamte Oberfläche der Rückseite der Rückenstütze zu bedecken. Diese Pilzbänder haften auf der Stoffoberfläche des Rückenlehnenpolsters und erlauben dadurch die individuelle Anpassung der Lage der Rückenstütze an die Anatomie des jeweiligen Fahrers, wie dies in Fig. 3 dargestellt ist. Diese Anpassung bzw. Montage der Rückestütze ist schnell und unproblematisch durchführbar, auch wenn sich die Stütze, wie in Fig. 7 gezeigt, unterhalb des Schonbezuges 46 befindet, da dieser die Zugänglichkeit zur Oberfläche der Rückenlehne 45 bekanntlich nicht verwehrt.

Die Abmessungen der aus einem recyclefähigen Schaumstoff bestehenden Rückenstütze sind an die Größe der Rückenlehne des Sitzes angepaßt und betragen normalerweise 33 x 22 x 5 cm.

Die Anordnung der Pilzbänder an der Rückenstütze 41 kann wahlweise horizontal oder vertikal erfolgen, da die jeweiligen Rückseiten sowohl des Velours- als auch des Pilzbandes bzw. Hakenbandes mit einem stark haftenden Textilkleber versehen sind. Die Anbringung erfolgt durch Entfernen der Folien, die den Kleber der Velours- und Pilzbänder abdecken.

## Patentansprüche

1. Schonbezüge (4, 5, 46) und Rückenstütze (41) für eine PKW-Sitzausstattung, bestehend aus zwei einzelnen Vordersitzen (1a, 1b) mit geteilter oder durchgehender Sitzbank und wahlweise separaten Kopfstützen (3a, 3b) sowie einer durchgehenden zwei/drei-sitzigen Sitzbank (2) mit ein- oder mehrteiliger Rückenlehne (7) für die ein- oder mehrteiligen Rücksitze, **dadurch gekennzeichnet, daß** die Schonbezüge für die Vordersitze (1a, 1b) aus zwei Teilen, nämlich einem Rückenteil (5) und einem Sitzteil (4), bestehen, von denen der Sitzteil (4) an seinen Seitenflächen einen Tunnelzug (8) mit eingelegter Zugkordel (12), an den beiden Seiten einen Gummizug (20) mit Haken (21) zur Befestigung des Bezugs und an seinem hinteren Sitzflächenende (23) einen Stretchtunnel (11), der sich durch die Sitzkehle (24) erstreckt, aufweist und der Rückenteil (5) mit wenigstens einer Stofflasche (25) aus Stretchstoff versehen ist, die wenigstens ein Veloursband (10) und als Gegenstück ein Pilzband (9) aufweist, das mit dem Veloursband zusammenwirkt.

2. Schonbezüge und Rückenstütze nach Anspruch 1, **dadurch gekennzeichnet, daß** der Rücksitzbankschonbezug aus wenigstens zwei Teilen, nämlich wenigstens einem Rückenteil (7) und einem Sitzteil (26), besteht, deren Enden in der Kehle (29) der Rücksitzbank (2) zwischen Rückenlehne und Sitz Stretchtunnel (27, 28) zur Straffung der Sitzfläche (30) des Sitzteilbezugs (26) aufweisen, wobei sowohl der Sitzteilbezug (26) als auch der Rückenteilbezug (38) mit Tunnelzügen (16, 31) zur Aufnahme von Zugkordeln (17, 32) zwecks Befestigung und Straffung der Schonbezüge (7, 26) auf der Rücksitzbank (2) versehen sind.

3. Schonbezüge und Rückenstütze nach Anspruch 1 oder 2, **dadurch gekennzeichnet, daß** der Schonbezug (6) der Kopfstützen (3a, 3b) mit Hilfe eines Klettverschlusses (33), bestehend aus wenigstens einem Veloursband und einem Pilzband, die zusammen- wirken, auf dem Polster befestigbar sind.

4. Schonbezüge und Rückenstütze nach einem der Ansprüche 1 bis 3, **dadurch gekennzeichnet,** daß die Stofflasche (25) am unteren Ende des Vorderteils des Rückenteils (5) angebracht ist und an der Innenseite mit dem Veloursband (10) versehen ist, das mit dem an der Innenseite des Rückenteils angebrachten Pilzband (9) zur Halterung und Straffung des Rückenteils des Schonbezugs auf der Rückenlehne des Vordersitzes (1a, 1b) zusammenwirkt.

5. Schonbezüge und Rückenstütze nach einem der Ansprüche 1 bis 4, **dadurch gekennzeichnet,** daß die in die Tunnelzüge (8, 16, 31) des Sitzteils bzw. der ein- oder mehrteiligen Sitzbank eingelegten Zugkordeln (12, 17, 32) an der Sitzfrontseite (13, 18) bzw. Rückenlehnenoberseite (39) austreten und mit Hilfe von Kordelfeststellern (14, 19, 40) straffbar sind.

6. Schonbezüge und Rückenstütze nach einem der Ansprüche 1 bis 5, **dadurch gekennzeichnet,** daß die an den beiden Seiten des Sitzteils (4) befindlichen Haken (21) der Gummizüge (20) zur Straffung der Schonbezüge an den Sitzen einhakbar sind.

7. Schonbezüge und Rückenstütze nach einem der Ansprüche 1 bis 6, **dadurch gekennzeichnet,** daß die Stretchtunnel (11, 27, 28) mit einer Rolle aus Schaumstoff versehen sind, die durch die Sitzkehle geschoben ist und sich dieser im Übergang zwischen Rücken- und Sitzfläche flexibel anpaßt.

8. Schonbezüge und Rückenstütze nach Anspruch 7, **dadurch gekennzeichnet,** daß die Schaumstoffrolle in den zugehörigen Stretchtunnel eingenäht ist.

9. Schonbezüge und Rückenstütze nach Anspruch 7 oder 8, **dadurch gekennzeichnet,** daß die Schaumstoffrolle so bemessen ist, daß sie dem Schonbezugsstoff zur Straffung der Sitzfläche einen Rutschwiderstand bietet.

10. Schonbezüge und Rückenstütze nach einem der Ansprüche 1 bis 9, **dadurch gekennzeichnet,** daß auf der Oberseite des Polsters des Rückenteils (5, 7) Ausschnitte (34) vorgesehen sind, durch die hindurch die Kopfstützenhalterungen (35) für die vorderen und/oder hinteren Kopfstützen (3a, 3b) einsteckbar sind.

11. Schonbezüge und Rückenstütze nach einem der Ansprüche 1 bis 10, **dadurch gekennzeichnet,** daß zu beiden Seiten des Sitzteilbezugs (26) der Sitzbank (2) Stretchtaschen (15) angebracht sind, in die Polsterecken aus Schaumstoff eingeführt sind.

12. Schonbezüge und Rückenstütze nach Anspruch 11, **dadurch gekennzeichnet,** daß die Stretchtaschen (15) aufgenäht sind.

13. Schonbezüge und Rückenstütze nach einem der Ansprüche 1 bis 12, **dadurch gekennzeichnet,** daß für zweitürige Fahrzeuge an den Außenseiten (35) der Rückenteile (5, 7) Ausschnitte (36) für den Durchgang der Entriegelungshebel zum Wegklappen der Rückenlehnen vorgesehen sind.

14. Schonbezüge und Rückenstütze nach einem der Ansprüche 1 bis 13, **dadurch gekennzeichnet,** daß zur Befestigung der in den Tunnelzügen (8, 16) befindlichen Zugkordeln (12, 17) an den Seitenflächen der Sitzteile (4) und der Sitzbank (26) Riegel (37) vorgesehen sind.

15. Schonbezüge und Rückenstütze nach einem der Ansprüche 1 bis 14, **dadurch gekennzeichnet,** daß der Tunnelzug (8, 23, 27, 28) aus Stretchmaterial ausgebildet ist.

16. Schonbezüge und Rückenstütze nach einem oder mehreren der Ansprüche 1 bis 15, **dadurch gekennzeichnet,** daß die Rückenstütze (41) ein Schaumstoffpolster (42) ist, das auf der Rückenlehne (45) des Vordersitzes (1a, 1b) oder Hintersitzes (2) mittels wenigstens eines auf ihr angebrachten Klettverschlusses (43) oder mittels Teilen eines solchen Verschlusses, insbesondere eines Pilzbandes, befestigbar und unterhalb des Schonbezuges (46) anordbar ist.

17. Schonbezüge und Rückenstütze nach Anspruch 16, **dadurch gekennzeichnet,** daß die Rückenstütze (41) nach ihrer Befestigung auf der Oberfläche der Rückenlehne (45) des Sitzes durch den Schonbezug (46), der in an sich bekannter Weise über die Rückenlehne (45) spannbar ist, zusätzlich gegen seitliches Verrutschen fixierbar ist und dadurch zum integralen Bestandteil des Autositzes wird.

18. Schonbezüge und Rückenstütze nach Anspruch 16 oder 17, **dadurch gekennzeichnet,** daß der oder die Klettverschlüsse (43) wenigstens ein Pilzband (48) aufweisen, das auf die Rückseite (47) der Rückenstütze (41) aufgeklebt ist und mit der Stoffoberfläche der Rückenlehne (45) in haftenden Eingriff bringbar ist, der ein Verrutschen verhindert.

19. Schonbezüge und Rückenstütze nach Anspruch 18, **dadurch gekennzeichnet,** daß das oder die Pilzbänder (48) in mehrere Abschnitte aufgeteilt sind, die über die gesamte Oberfläche der Rückseite (47) der Rückenstütze (41) verteilt sind.

20. Schonbezüge und Rückenstütze nach einem der Ansprüche 16 bis 19, dadurch gekennzeichnet, daß die Rückenstütze (41) sich im wesentlichen über die gesamte Breite der Rückenlehne (45) erstreckt.
